Europäisches Patentamt

European Patent Office

Office européen des brevets

(11) Numéro de publication: **0 443 342 A1**

# (12) DEMANDE DE BREVET EUROPEEN

(21) Numéro de dépôt: 91101028.8

(22) Date de dépôt: **26.01.91**

(51) Int. Cl.⁵: **G05F 1/38**, H02M 3/28, H01F 29/14

(30) Priorité: **23.02.90 CH 584/90**

(43) Date de publication de la demande: **28.08.91 Bulletin 91/35**

(84) Etats contractants désignés: **AT BE CH DE DK ES FR GB GR IT LI LU NL SE**

(71) Demandeur: **Bonnet, André**
**Quartier du Clos**
**F-13360 Roquevaire(FR)**

Demandeur: **Danner, Jean-Pierre**
**Ch. des Severiers**
**F-13600 La Ciotat(FR)**

(72) Inventeur: **Bonnet, André**
**Quartier du Clos**
**F-13360 Roquevaire(FR)**
Inventeur: **Danner, Jean-Pierre**
**Ch. des Severiers**
**F-13600 La Ciotat(FR)**
Inventeur: **Romanacce, Philippe**
**16, Rue Croix de Regnier**
**F-13004 Marseille(FR)**

(74) Mandataire: **Micheli & Cie**
**Rue de Genève 122, Case Postale 61**
**CH-1226 Genève-Thonex(CH)**

(54) **Procédé de contrôle du transfert d'énergie dans un convertisseur statique; convertisseur statique d'énergie pour sa mise en oeuvre et alimentation électrique utilisant un tel convertisseur.**

(57) On contrôle la puissance transmise du primaire au secondaire du convertisseur statique en modifiant la valeur de la perméabilité d'au moins une zone de son circuit magnétique.

Il comporte un circuit magnétique principal (CM1) muni d'un enroulement primaire (N1) et d'au moins un enroulement secondaire (N2) ainsi qu'un circuit magnétique auxiliaire (CMa) muni d'un enroulement auxiliaire Na. La disposition de ces deux circuits magnétiques (CM1 et CMa) est telle que l'inductance mutuelle entre les enroulements (N1, N2) du circuit magnétique principal (CM1) d'une part et l'enroulement auxiliaire (Na) d'autre part soit nulle en l'absence d'ampères-tours propres au circuit magnétique principal (CM1).

EP 0 443 342 A1

FIG. 5

EP 0 443 342 A1

La présente invention a pour objet un convertisseur statique d'énergie utilisé pour le contrôle ou la régulation de l'énergie électrique transmise à un récepteur de type quelconque.

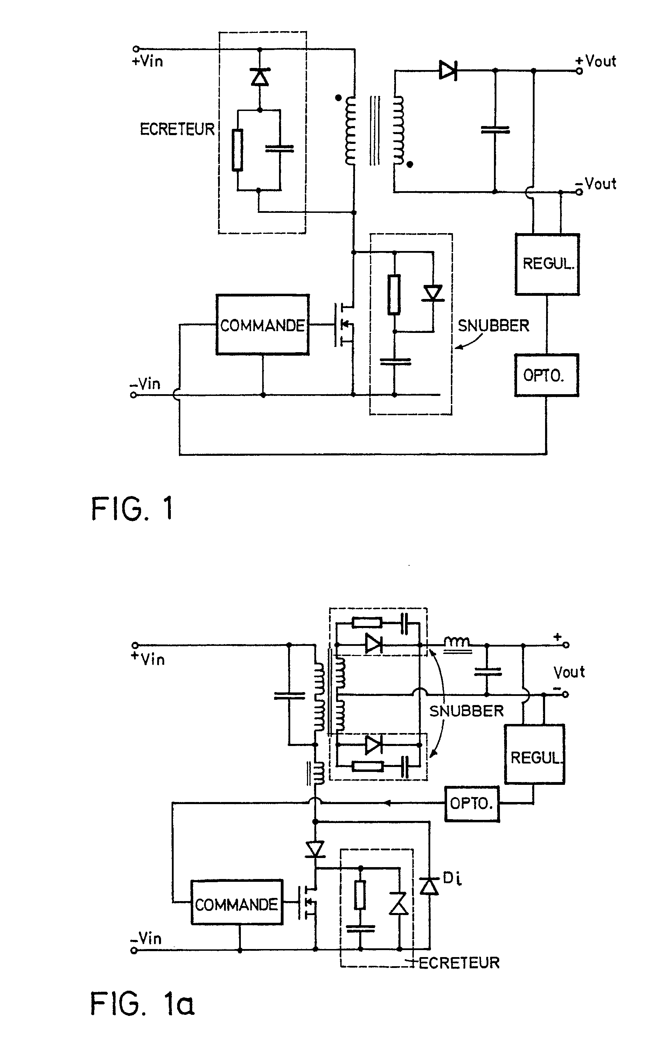

Pour les alimentations électriques en courant continu de toute sorte de récepteurs, on utilise actuellement des circuits comprenant généralement un redresseur et alimentant un convertisseur statique du type "Fly-back" conduisant à la réalisation d'un circuit d'alimentation du type de celui illustré schématiquement à la figure 1. Dans ce type de circuit, l'énergie délivrée à la charge sous la tension Vout est contrôlée par un circuit de régulation commandant l'alimentation d'énergie à partir d'une source de tension Vin. Il faut intervenir sur la commande du primaire pour moduler l'alimentation en énergie.

Ces convertisseurs "Fly-back" nécessitent pour leur bon fonctionnement l'utilisation d'un circuit écréteur de surtension qui protège le transistor et d'un circuit "snubber" qui réduit les perturbations conduites et rayonnées. La grandeur de sortie à réguler est ramenée au primaire par un retour isolé utilisant un dispositif optoélectrique dans de nombreux cas. La nécessité de ces circuits annexes augmente le volume du convertisseur ainsi que son prix. De plus, la fiabilité des circuits optoélectroniques est limitée dans le temps.

On connaît actuellement encore des alimentations du type à résonance du type "C.S.C.", illustré à la figure 1a, fonctionnant à partir de batterie, par exemple de 48V. Ces alimentations à résonance présentent également certains des inconvénients du convertisseur "Fly-back", présence de circuit écréteur et snubber ainsi que l'intervention sur la commande du primaire pour moduler l'alimentation en énergie.

La présente invention a pour but la réalisation d'un système de conversion d'énergie plus fiable, moins couteuse et d'un moindre encombrement que celles existant à l'heure actuelle.

La présente invention propose pour la réalisation de ce but un procédé de transfert d'énergie dans un convertisseur statique, un convertisseur statique d'énergie et son utilisation particulière qui se distinguent par les caractéristiques énumérées aux revendications 1, 6 et 12.

Le dessin annexé illustre schématiquement et à titre d'exemple plusieurs formes d'exécution du convertisseur statique selon l'invention et son utilisation.

La figure 2 est un schéma bloc de principe d'une alimentation utilisant le convertisseur statique d'énergie selon l'invention.

Les figures 3 et 4 sont une vue de dessus respectivement de côté d'une forme d'exécution du convertisseur statique selon l'invention.

La figure 5 est un schéma de principe d'une autre forme d'exécution du convertisseur statique selon l'invention.

La figure 6 illustre schématiquement une troisième forme d'exécution du convertisseur statique selon l'invention.

La figure 7 est un schéma de principe d'une alimentation utilisant un convertisseur à résonance selon l'invention.

La figure 8 est le schéma électrique détaillé d'une alimentation utilisant un convertisseur statique d'énergie selon l'invention.

La figure 9 illustre le schéma bloc de principe d' un filtre secteur.

Dans tous les procédés de régulation ou de contrôle de l'énergie transmise à un récepteur quelconque par l'intermédiaire d'un convertisseur statique d'énergie à résonance connus à l'heure actuelle on module, par l'actionnement en "tout ou rien" d'interrupteurs de puissance, la durée des conductions et la périodicité de celles-ci pour régler le transfert d'énergie. Un tel procédé est très délicat à mettre en oeuvre dans les convertisseurs monointerrupteur à résonance.

Le présent procédé de contrôle du transfert d'énergie dans un convertisseur statique à résonance repose sur un concept entièrement nouveau qui permet de dissocier le contrôle de l'énergie qui transite par le convertisseur et la commande des interrupteurs statiques. Selon ce nouveau procédé le contrôle du transfert d'énergie est obtenu en faisant varier la perméabilité du matériau magnétique constituant le transformateur ou l'auto-transformateur de puissance et en jouant donc sur le degré de saturation de ce matériau magnétique.

L'interrupteur "tout ou rien" commandant l'alimentation du transformateur d'intensité est commandé à l'ouverture par un capteur d'intensité uniquement en fonction d'une valeur maximale de courant définie par le concepteur. La commande de cet interrupteur est donc totalement dissociée du contrôle du transfert d'énergie.

Pour faire varier localement la perméabilité du matériau magnétique qui constitue le transformateur du convertisseur on utilise un bobinage auxiliaire placé de manière à saturer le matériau magnétique du transformateur. Ce bobinage doit par ailleurs présenter une inductance mutuelle, soit un couplage inductif, pratiquement nul avec les enroulements de puissance du transformateur.

Ce bobinage auxiliaire est alimenté par un courant d'intensité réglable qui constitue la grandeur de

3

commande de l'énergie transmise par le convertisseur. Afin de régler une grandeur de sortie du convertisseur, sa tension de sortie par exemple, il suffit de réaliser une boucle de régulation linéaire dans laquelle le courant circulant dans le bobinage auxiliaire est proportionnel à l'écart entre la grandeur de sortie souhaitée ou de consigne et sa valeur réelle effectivement mesurée.

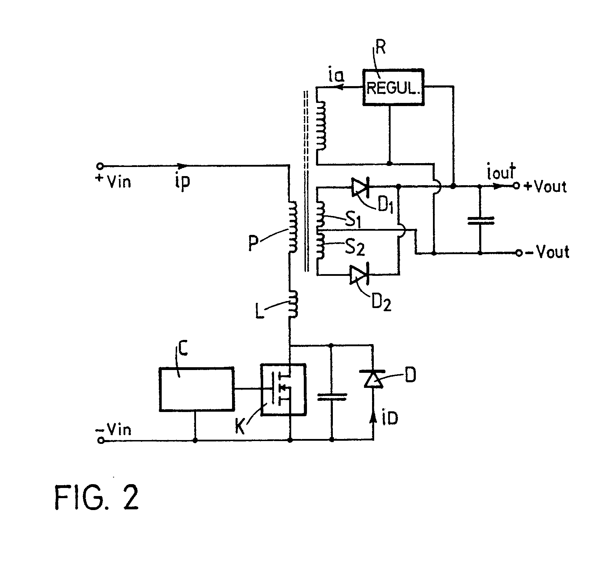

La figure 2 illustre schématiquement le principe de ce procédé de réglage de l'énergie transférée par un convertisseur statique.

La tension d'alimentation Vin est appliquée aux bornes de l'enroulement primaire P d'un transformateur d'intensité T. Un interrupteur "tout ou rien" K est situé dans le circuit d'alimentation du primaire P du transformateur T. Un dispositif de commande C de cet interrupteur provoque I ouverture de l'interrupteur K dès que l'intensité du courant primaire ip atteint une valeur pré-établie. Ce même circuit de commande C ferme l'interrupteur K dès qu'un courant id s'installe dans la diode D en parallèle inverse sur l'interrupteur K; à la mise sous tension l'interrupteur K est automatiquement fermé.

Le transformateur d'intensité T comporte deux enroulements secondaires S1, S2 reliés d'une part à une borne de sortie -Vout et d'autre part, par l'intermédiaire des diodes D1, D2 à l'autre borne de sortie +Vout.

Le transformateur d'intensité T comporte encore l'enroulement auxiliaire ou de commande A qui est parcouru par un courant ia déterminé par un circuit de régulation R en fonction du courant de sortie iout ou de la tension de sortie Vout.

L'exemple illustré à la figure 2 constitue une alimentation électrique fonctionnant à partir d'une source d'énergie de tension continue ±Vin et délivrant une tension de sortie continue ±Vout.

Il est évident que l'on peut obtenir une tension de sortie alternative en supprimant les diodes D1 et D2.

En outre, en utilisant un redresseur, suivi éventuellement d'un filtre, pour alimenter les bornes d'entrée ±Vin, on peut alimenter le convertisseur d'énergie par un secteur de distribution alternatif.

Ce procédé de contrôle de l'énergie transférée par un convertisseur d'énergie statique présente par rapport aux procédés connus les principaux avantages suivants :

- Les qualités généralement obtenues avec les procédés connus le sont ici à plus basse fréquence et à une fréquence pratiquement constante. En travaillant par exemple à une fréquence d'environ 100 kHz, on peut utiliser pour le convertisseur des composants classiques.
- La commande par régulation magnétique est très simple. Le convertisseur peut fonctionner aussi bien à vide qu'en court-circuit sans utiliser des composants annexes et tout en assurant une commutation douce. On peut donc supprimer tout circuit écréteur de surtension nécessaire habituellement.
- Le "courant de recouvrement" des diodes qui génère des surtensions non maitrisées ne soulève ici aucun problème.
- Les diodes D1, D2 au secondaire voient un courant quasi sinusoïdal et leur commutation en est facilitée. On peut supprimer les circuits "Snubber" habituellement nécessaires.
- Le rendement gobal est augmenté.
- N'ayant pas de retour du secondaire sur le primaire la conception et la réalisation du convertisseur sont simplifiées et améliorées. De plus la mise en parallèle de plusieurs alimentations ne pose pas de problème.
- Le nombre de composants est très réduits, le M.T.B.F. est très élevé.
- Il n'y a pas de front raide lors des commutations ce qui limite le rayonnement à une valeur très faible et à un spectre étroit.

On peut encore noter que l'inductance L du circuit primaire peut être soit une bobine à noyau de fer, soit être constituée par l'inductance de fuite des bobinages du transformateur Tr ce qui permet un gain de place important. L'interrupteur K est un interrupteur de puissance. N'importe quelle technologie de semi-conducteurs ou associations de semi-conducteurs peut être utilisée. La diode D peut être intégrée dans l'interrupteur K par exemple dans un transistor M.O.S. Le circuit de commande C peut être réalisé à partir de circuits intégrés du commerce ou en éléments discrets. La mesure du courant ip qui le commande peut être obtenue suivant différentes technologies, shunt, transformateur d'intensité, etc. Cette mesure peut être placée en n'importe quel endroit du circuit primaire. Enfin, toute technique de détection de la conduction de la diode D convient pour commander la fermeture de l'interrupteur K.

Par contre les convertisseurs statiques monointerrupteurs quasi-résonnants actuels nécessitent impérativement un circuit-écréteur ce qui induit un front raide générateur de perturbations. La régulation agit sur la fréquence de commande de l'interrupteur de puissance, celle-ci varie d'un facteur 2. Le rayonnement est important et à large spectre du fait des fronts raides et de la fréquence variable. Enfin, le prix de revient est plus élevé du fait du plus grand nombre de composants et des exigences plus fortes auxquelles ils sont soumis.

En résumé, les convertisseurs statiques actuels utilisent les transformateurs comme des éléments passifs pour réaliser une adaptation d'impédance ou un isolement galvanique. Ils n'interviennent donc pas dans la régulation de la puissance transmise.

En conséquence, il faut assurer un contrôle soit du courant, soit de la tension au moyen d'interrupteurs commandés. Le transformateur ne travaille pas à puissance constante.

La boucle de régulation nécessite un retour isolé d'une information image de la grandeur à réguler ce qui peut être un inconvénient.

La présente invention a pour but d'obvier à tous ces inconvénients et en particulier le présent procédé a pour but de réguler le transfert de l'énergie électrique à travers un circuit magnétique classique fonctionnant en transformateur d'intensité au moyen d'un enroulement auxiliaire destiné à moduler la perméabilité magnétique du transformateur.

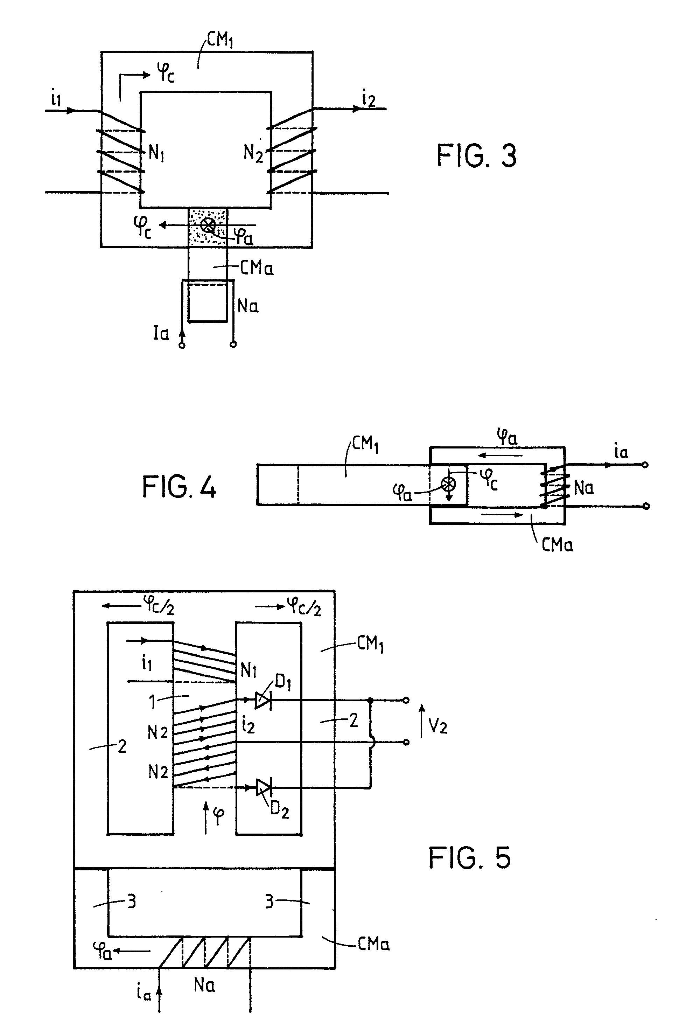

Les figures 3 et 4 illustrent une première forme d'exécution du transformateur d'intensité d'un convertisseur d'énergie statique pour la mise en oeuvre du procédé de contrôle du transfert d'énergie décrit.

Ce transformateur d'intensité comporte un premier circuit magnétique CM1 muni des bobinages primaire N1 et secondaire N2 traversés par les courants i1 et i2 respectivement; $\phi c$ étant le flux magnétique traversant ce premier circuit magnétique CM1.

On peut montrer qu'un tel transformateur d'intensité est régi par la loi d'Hopkinson qui implique que :

$$N1 \cdot i1 - N2 \cdot i2 = R \cdot \phi c$$

ou

$$i2 = \tfrac{N1}{N2} \cdot (i1 - R \cdot \phi c)$$

où

N1 : nombre de spires du bobinage primaire
N2 : nombre de spires du bobinage secondaire
i1 : courant dans le bobinage primaire
i2 : courant dans le bobinage secondaire
R : réluctance du circuit $R = L / (\mu \cdot S)$
L : longueur moyenne du circuit magnétique
S : section droite du circuit magnétique
$\mu$ : perméabilité du circuit magnétique
$\phi c$ : flux commun à toutes les spires

Généralement un transformateur d'intensité travaille loin de la saturation, sa perméabilité est supposée infinie de sorte que sa réluctance R est supposée nulle.

Le transformateur d'intensité du convertisseur selon l'invention comporte encore un circuit magnétique auxiliaire CMa disposé de manière à créer un flux $\phi a$ transversal au flux $\phi c$ et permettant de faire varier la permeabilité $\mu'$ de la zone commune aux deux circuits magnétique CM1 et CMa. Ce circuit magnétique CMa comporte un bobinage auxiliaire Na parcouru par un courant ia.

En l'absence de courants i1 et i2 seul le bobinage auxiliaire intervient et on peut écrire que :

$$Na \cdot ia = Ra \cdot \phi a + R' \cdot \phi a$$

où Ra est la réluctance du circuit auxiliaire et R' la réluctance de la zone commune aux circuits magnétiques CM1 et CMa.

En supposant Ra << R', on a :

$$Na \cdot ia = R' \cdot \phi a = \left( \frac{l'}{S} \cdot \phi a \right) \cdot \frac{1}{\mu'}$$

$\mu'$ étant la perméabilité de la zone commune aux deux circuits magnétiques, 1' la longueur de cette zone et S sa section.

Comme les deux flux $\phi c$ et $\phi a$ sont orthogonaux la perméabilité $\mu'$ de la zone commune aux deux circuits magnétiques est une grandeur commune aux deux circuits et que l'on peut réaliser de par la construction du transformateur, que les réluctances R1, du circuit magnétique CM1 et Ra du circuit magnétique CM1 soient nulles ou négligeables par rapport à la réluctance R' de la zone commune à ces deux circuits, on en déduit que :

$$i2 = \frac{N1}{N2} \cdot (i1 - R' \cdot \varphi c)$$

et comme

$$R' = \frac{l'}{S \cdot \mu'} = \frac{Na \cdot ia}{\varphi a}$$

$$i2 = \frac{N1}{N2} \cdot i1 - \frac{N1}{N2} \cdot \frac{\varphi c}{\varphi a} \cdot Na \cdot ia$$

ainsi le courant du secondaire i2 est une fonction du courant auxiliaire ia de sorte qu'en agissant seulement sur ce courant auxiliaire il est possible de commander la valeur du courant secondaire i2 pour un courant i1 donné.

De cette façon on réalise bien un transformateur d'intensité dont le courant primaire i1 peut être commandé pour lui-même en fonction d'une valeur maximale à ne pas dépasser, et dont le courant secondaire i2 peut être régulé à l'aide du courant auxiliaire ia; il n'y a plus d'interaction en retour du secondaire sur le primaire.

La disposition orthogonale des deux circuits magnétiques CM1 et CMa assure une inductance mutuelle nulle entre eux.

Dans des variantes, les circuits magnétiques CM1 et CMa pourraient ne pas être orthogonaux, il suffit que le flux auxiliaire $\phi a$ se superpose au flux principal $\phi c$ dans une partie au moins du circuit magnétique principal CM1 afin de permettre de commander les variations de sa perméabilité.

On peut bien entendu prévoir si nécessaire des entrefers soit dans le circuit magnétique CM1, soit dans le circuit magnétique auxiliaire CMa ou encore dans les deux circuits ou entre ces deux circuits magnétiques.

La figure 5 illustre une seconde forme d'exécution d'un transformateur pour la réalisation d'un convertisseur statique selon l'invention. Cet exemple illustre un premier circuit magnétique CM1 comportant un jambe centrale 1 et deux jambes latérales 2 dont la section est égale à la moitié de celle de la jambe centrale. Les bobinages primaire N1 et secondaire N2 sont tous situés sur la jambe centrale 1 du circuit magnétique CM1. Ce transformateur comporte encore un circuit magnétique auxiliaire CMa en forme de U dont les côtés 3 sont situés dans le prolongement des jambes latérales 2 du circuit magnétiques CM1. Ainsi, la mutuelle inductance entre le bobinage auxiliaire Na et le bobinage primaire N1 est quasi nulle. Ce circuit magnétique auxiliaire CMa comporte le bobinage auxiliaire Na parcouru par un courant ia.

Un entrefer dans le circuit magnétique CM1 peut être rendu indispensable selon l'utilisation afin d'éviter la saturation du matériau consécutive à un courant primaire moyen non nul. D'autre part, un entrefer entre les circuits magnétiques CM1 et CMa peut être nécessaire afin de régler la constante de temps liée à l'enroulement de régulation Na.

Les diodes D1, D2 étant supposées parfaites, la tension de sortie V2 est constante. En supprimant les diodes D1, D2 on obtient une tension de sortie alternative.

Cette forme d'exécution du transformateur fonctionne de la même façon que celui décrit précédemment. Il suffit d'asservir le courant auxiliaire ia à une grandeur physique pour assurer la régulation du courant de sortie i2 ou la tension de sortie V2.

Dans des variantes, on peut prévoir un circuit magnétique principal CM1 pouvant comporter plusieurs jambes centrales ou latérales munies d'enroulements primaire et/ou secondaire. La forme du circuit magnétique auxiliaire CMa dépend naturellement de celle du circuit CM1 avec lequel il est utilisé.

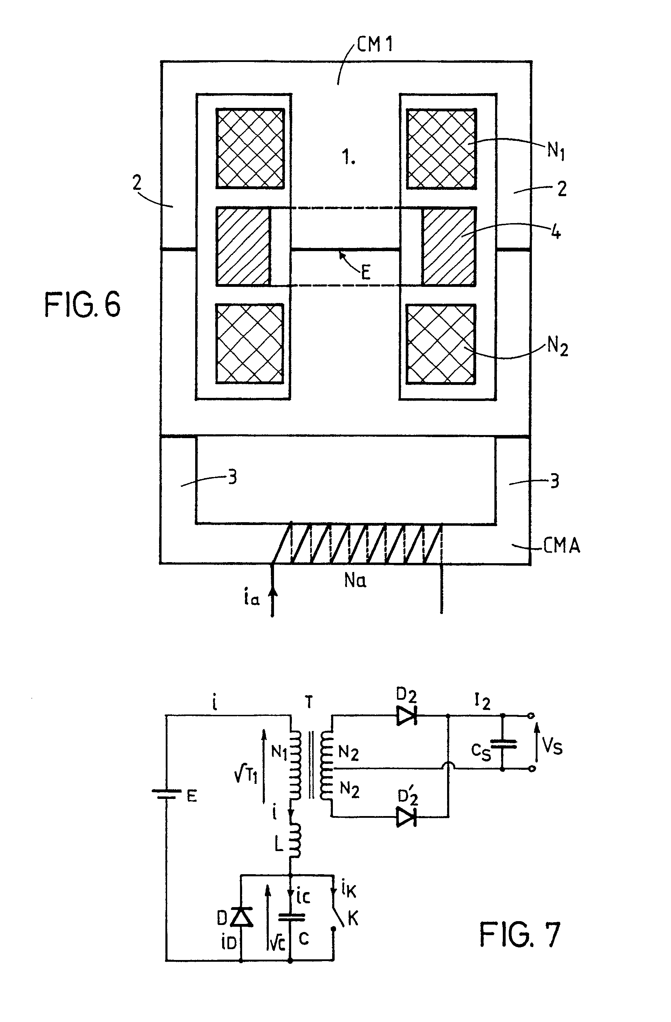

Dans ces réalisations le fonctionnement du transformateur est indépendant de l'inductance de fuite du primaire. Comme les alimentations à résonance nécessitent une inductance on peut calibrer cette inductance de fuite du primaire pour l'utiliser comme inductance de l'alimentation. Ceci est illustré à la figure 6 qui reprend le montage de la figure 5 dans lequel le circuit magnétique principal CM1 comporte un entrefer E et où la jambe centrale 1 comporte entre les bobinages primaire N1 et secondaire N2 un tore en ferrite 4 qui joue le rôle d'un écran magnétique pour que les lignes de fuite du bobinage primaire N1 ne soient pas vues des bobinages secondaires N2 et auxiliaire Na.

Dans toutes ces réalisations, il est possible de moduler la puissance transmise au bobinage secondaire N2 par l'intermédiaire d'un enroulement auxiliaire Na. On peut noter en outre que comme pour tout transformateur d'intensité le fonctionnement en court-circuit est naturel. Il est toutefois possible d'obtenir un courant secondaire i2 nul même si le courant primaire i1 n'est pas nul.

Par contre, contrairement à un transformateur d'intensité habituel où il n'est pas possible d'obtenir un courant secondaire nul en fonctionnement à vide, ceci est rendu possible dans les montages décrits en saturant le matériau magnétique à l'aide de l'enroulement auxiliaire.

La figure 7 est un schéma de principe d'un convertisseur statique d'énergie à résonance. Le fonctionnement d'un tel convertisseur comprend les quatres phases suivantes :

a. Les conditions initiales sont i = 0 et vc = 0. Au temps t = 0 on ferme l'interrupteur K ce qui provoque une croissance linéaire du courant i dans l'inductance L. A la fin de cette phase, on a :

$$t = t1: \quad i = I1 = \frac{E - E'}{L} \cdot t1$$

et on ouvre l'interrupteur K.

b. La seconde phase est une phase de résonance. La diode D2 conduit tandis que la diode D est bloquée. Lorsque le courant i change de signe à t = t2 la diode D2 se bloque et la diode D'2 conduit.

c. La phase de résonance se poursuit. Pour que le fonctionnement du convertisseur soit périodique en régime permanent établi, il faut que la tension de crête aux bornes du condensateur C soit

$$VM > 2 \; (E+E') \quad \text{soit}$$

$$(E + E') + \sqrt{I1^2 \cdot \frac{L}{C} + (E - E')^2} > 2 \; (E + E')$$

Cette relation fixe la valeur minimale de I1 et donc la durée minimale de conduction de l'interrupteur K par

$$t1 = \frac{I1 \cdot L}{E - E'}$$

et la valeur du courant est imax

$$= \sqrt{I1^2 + \frac{C}{L} \; (E - E')^2}$$

A la fin de cette phase, t = t3; i = I3; vc = 0

d. Dans cette dernière phase, il n'y a plus de résonance. La diode D conduit, vc = 0. La diode D'2 conduit tant que le courant i est non nul. Lorsque i = 0 en t = t4, on revient aux conditions initiales.

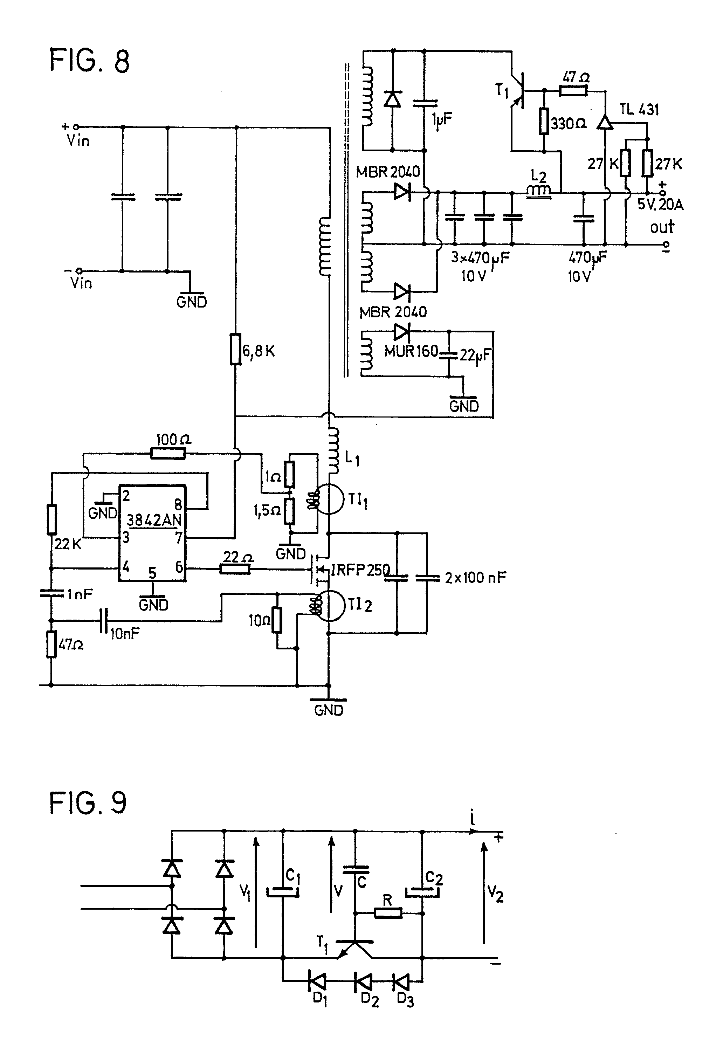

La figure 8 donne à titre d'exemple une réalisation pratique du convertisseur statique d'énergie décrit plus haut. On voit que seuls trois composants de puissance (1 x IRFP 250 et 2 x MBR 2040) sont nécessaires. De plus, l'électronique de commande est très simple, rustique et très fiable.

Enfin, il n'est pas nécessaire de disposer d'un circuit écréteur dissipatif pour protéger l'interrupteur ni de circuits snubber dissipatifs sur les diodes du secondaire.

Un convertisseur statique d'énergie tel que décrit ci-dessus peut être utilisé pour réaliser l'alimentation électrique de toute sorte d'appareils.

Lorsque l'enroulement primaire N1 est alimenté par une source d'énergie continue la tension de sortie peut être soit continue si l'on utilise des diodes D1, D2 soit alternative si ces diodes sont supprimées.

On peut également alimenter l'enroulement primaire à partir d'un réseau alternatif par l'intermédiaire d'un redresseur et si nécessaire d'un filtre électronique. Dans ce cas, la tension de sortie est également soit continue soit alternative suivant la présence ou l'absence des diodes D1, D2.

Lorsque le convertisseur statique d'énergie décrit est branché sur le réseau alternatif, on utilise de préférence par exemple un redresseur-filtre tel qu'illustré à la figure 9 qui permet de remplacer les circuits habituels d'anti-parasitage.

Le condensateur de filtrage habituellement utilisé est remplacé par deux condensateurs de valeur moitié. Le transistor bipolaire monté entre les deux condensateurs, en série avec la ligne d'alimentation fonctionne en régime linéaire et se comporte comme une impédance très grande vis à vis des signaux haute fréquence réinjectés vers le secteur par le convertisseur et comme une impédance très faible vis à vis du courant appelé à la fréquence du secteur alternatif. Il est tout à fait adapté à la structure résonante décrite ici. Le prix de revient et le volume occupé par ce filtre électronique sont extrêmement intéressants.

Le fonctionnement de ce filtre électronique est retracé dans ce qui suit en référence à la figure 9.

Le convertisseur appelle un courant i qui est quasisinusoïdal à la fréquence de récurrence. Le condensateur C2 est imparfait, il possède une résistance interne et une inductance parasite. Ainsi, la tension V2 comporte une composante ondulée de l'ordre de 1 volt crête à crête à 100 kHz. L'objet du filtre secteur est d'éviter que le réseau ne "voit" ce signal quand les diodes du pont redresseur sont en conduction.

L'ensemble R, C est un filtre passe-bas qui produit une atténuation du premier ordre vis à vis de V2. Par suite, V n'est quasiment plus porteuse d'harmoniques de fréquence élevée si la fréquence de coupure est légèrement supérieure à deux fois la fréquence du réseau d'alimentation. Le transistor fonctionne en amplificateur suiveur de tension, V1 est donc filtrée.

C1 est d'une capacité de même valeur que C2. Ainsi, le transistor travaille pendant une période complète du réseau. La dissipation de puissance sur T1 est très faible (1W pour une alimentation de 150W).

Les diodes D1, D2, D3 permettent de véhiculer le courant de charge du condensateur C2 à la mise sous tension. Le transistor ne doit donc être dimensionné que pour le courant moyen appelé du côté convertisseur et pour une tension collecteur-émetteur inférieure à quelques volts.

Le convertisseur statique d'énergie et le filtre électronique décrits ci-dessus constituent une réalisation particulièrement avantageuse d'une alimentation électrique pour toute sorte d'appareils. Le procédé s'applique quelle que soit la ou les tensions de sortie. De même, la tension d'alimentation peut être quelconque, continue ou alternative redressée. Tous les ordres de grandeur peuvent être envisagés. Il suffit que l'interrupteur, à l'état bloqué, supporte la tension qui lui est appliquée. Une telle alimentation comprend un filtre électronique tel que décrit et illustré à la figure 9 suivi d'un convertisseur statique comprenant un transformateur d'intensité muni d'un bobinage auxiliaire de commande, d'un circuit de régulation réglant le courant circulant dans le bobinage auxiliaire en fonction de la tension ou du courant de sortie du convertisseur et un circuit de commande d'un interrupteur "tout ou rien" monté en série avec l'enroulement primaire du transformateur et réagissant à la valeur du courant circulant dans cet enroulement primaire.

Pour terminer, on peut brièvement récapituler les avantages que présente une alimentation telle que décrite par rapport aux alimentations courantes utilisant des convertisseurs statiques conventionnels du type "Fly-back" ou à résonance C.S.C. :

a. Le filtre actif utilisé est de faible coût et son encombrement est très réduit par rapport à une bobine à flux soustractif que nécessite une alimentation conventionnelle.

b. L'encombrement du circuit magnétique du présent dispositif est plus faible, environ cinq fois plus faible, que celui d'une alimentation conventionnelle. L'entrefer est très faible et les fuites en sont réduites. L'arrangement décrit permet en outre de se passer de circuit écréteur qui lui aussi entraîne des pertes (5 à 10%).

c. La commutation de l'interrupteur K est "douce", elle se fait dans le dispositif décrit toujours à tension nulle, aussi bien à l'enclenchement qu'au déclenchement. Ceci n'est pas le cas dans les alimentations connues qui présentent toujours une commutation "dure" à front raide entraînant de fortes pertes par rayonnement.

d. Suppression des circuits "Snubber".

e. Dans une alimentation conventionnelle, le prélèvement de l'image du courant primaire est perturbée par le bruit du convertisseur. Il faut donc utiliser un capteur sophistiqué, délicat et cher. Dans la structure décrite, le courant étant alternatif, on peut utiliser comme capteur un capteur magnétique non dissipatif ou un shunt résistif qui soit simple et robuste.

f. Dans une alimentation existante le courant passant dans les diodes du secondaire est de forme triangulaire.

Dans la structure décrite le courant circulant dans ces diodes est quasi-sinusoïdal; sa valeur efficace est donc plus faible par rapport à sa valeur moyenne ce qui entraîne moins de pertes par conduction.

De plus, dans la structure décrite ces diodes commutent à courant nul, il n'y a donc pas de pertes en commutation ni de bruit émis du fait de leur recouvrement. Enfin, la tension inverse de ces diodes est beaucoup plus faible.

On peut encore noter que la valeur des condensateurs de sortie de la structure décrite est de l'ordre du tiers, voire moins, de ceux utilisés dans une alimentation conventionnelle.

g. Dans la structure décrite la régulation se fait de façon magnétique sur le secondaire. Il n'y a pas de retour isolé de l'information sur le primaire.

h. Dans la structure proposée le courant au secondaire étant quasiment sinusoïdal sa dérivée est finie et relativement faible. L'écart entre la force électromotrice et la tension de sortie est à peine sensible pour une même inductance de fuite. La régulation croisée est donc bien meilleure.

i. La mise en parallèle de plusieurs alimentations de type "fly-back" nécessite une synchronisation des circuits de commandes. Dans la structure proposée la mise en parallèle ne pose aucun problème et ceci sans synchronisation.

**Revendications**

1. Procédé de contrôle du transfert d'énergie dans un convertisseur statique comprenant un circuit magnétique principal muni d'enroulements primaire et secondaire, caractérisé par le fait qu'on contrôle la puissance transmise du primaire au secondaire en modifiant la valeur de la perméabilité d'au moins une zone de ce circuit magnétique par l'intermédiaire d'un courant circulant dans un enroulement auxiliaire d'un circuit magnétique auxiliaire induisant dans ladite zone du circuit magnétique principal un flux magnétique auxiliaire.

2. Procédé selon la revendication 1, caractérisé par le fait qu'on crée à l'aide du circuit magnétique auxiliaire et de son bobinage un flux magnétique se superposant au flux magnétique du circuit magnétique principal.

3. Procédé selon la revendication 1 ou la revendication 2, caractérisé par le fait que les flux magnétiques principal et auxiliaire traversent une portion commune du circuit magnétique principal.

4. Procédé selon l'une des revendication précédentes, caractérisé par le fait qu'on régle la valeur du courant circulant dans le bobinage auxiliaire en fonction d'une grandeur physique.

5. Procédé selon la revendication 4, caractérisé par le fait que ladite grandeur physique est liée à l'énergie ou la puissance transmise par le convertisseur statique.

6. Convertisseur statique d'énergie pour la mise en oeuvre du procédé selon la revendication 1, caractérisé par le fait qu'il comporte un circuit magnétique principal muni d'un enroulement primaire et d'au moins un enroulement secondaire; par le fait qu'il comporte un circuit magnétique auxiliaire muni d'un enroulement auxiliaire, et par le fait que la disposition de ces deux circuits magnétiques est telle que l'inductance mutuelle entre les enroulements du circuit magnétique principal d'une part et l'enroulement auxiliaire d'autre part soit nulle en l'absence d'ampères-tours propres au circuit magnétique principal.

7. Convertisseur selon la revendication 6, caractérisé par le fait qu'il comporte un interrupteur tout ou rien en série avec son enroulement primaire, interrupteur commandé par un circuit de commande actionné par le courant parcourant l'enroulement primaire.

8. Convertisseur selon la revendication 6 ou la revendication 7, caractérisé par le fait qu'il comporte un circuit de réglage régulant le courant parcourant l'enroulement auxiliaire en fonction du courant parcourant le bobinage secondaire, de la tension aux bornes du bobinage secondaire ou de la puissance délivrée aux bornes de cet enroulement secondaire.

9. Convertisseur selon la revendication 8, caractérisé par le fait que le circuit magnétique principal comporte au moins une jambe centrale et deux jambes latérales, ces jambes étant reliées ensemble à chacune de leurs extrémités; par le fait que les bobinages primaire et secondaire sont disposés sur au moins certaines jambes du circuit magnétique principal et par le fait que le circuit magnétique auxiliaire présente des branches reliées entre elles et qui sont situées dans le prolongement d'au moins certaines jambes du circuit magnétique principal.

10. Convertisseur selon la revendication 9, caractérisé par le fait que le circuit magnétique principal présente un entrefer s'étendant perpendiculairement aux jambes, et par le fait qu'un tore en ferrite est situé entre le bobinage primaire et le bobinage secondaire.

11. Convertisseur selon la revendication 8, caractérisé par le fait que le circuit magnétique principal comporte une seule boucle, de même que le circuit magnétique auxiliaire et par le fait que ces boucles se croisent orthogonalement et possèdent une zone commune.

12. Convertisseur selon l'une des revendicatins 6 à 11, caractérisé par le fait que le bobinage primaire est alimenté par un réseau alternatif par l'intermédiaire d'un pont redresseur suivi d'un filtre électronique.

13. Convertisseur selon la revendication 12, caractérisé par le fait que le filtre comporte un transistor bipolaire ou un transistor MOS en série avec la ligne d'alimentation, monté entre deux condensateurs de même valeur branchés en parallèle, une série de diodes shuntant ledit transistor.

14. Convertisseur selon l'une des revendications 6 à 11, caractérisé par le fait que le bobinage primaire est alimenté par une source de tension continue.

15. Convertisseur selon l'une des revendications 6 à 14, caractérisé par le fait que l'enroulement secondaire délivre une tension alternative.

16. Convertisseur selon l'une des revendications 6 à 14, caractérisé par le fait que le point milieu de l'enroulement secondaire est relié à une borne de sortie, les points extrêmes de cet enroulement secondaire étant reliés par des diodes à l'autre borne de sortie.

17. Utilisation du convertisseur selon l'une des revendications 6 à 16 comme alimentation électrique.

**FIG. 1**

**FIG. 1a**

FIG. 2

FIG. 3

FIG. 4

FIG. 5

FIG. 6

FIG. 7

# FIG. 8

# FIG. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4342075 (H. HIROMITSU)<br>* colonne 2, ligne 52 – colonne 3, ligne 17 * | 1-6, 8, 14, 16, 17 | G05F1/38<br>H02M3/28<br>H01F29/14 |
| A | * colonne 4, ligne 32 – colonne 5, ligne 11 *<br>* colonne 6, ligne 25 – colonne 6, ligne 51 *<br>* colonne 7, ligne 64 – colonne 8, ligne 9 *<br>* colonne 9, ligne 23 – colonne 9, ligne 29; figures 5, 13 *<br>--- | 7, 9 | |
| X | US-A-3757201 (L. B. CORNWELL)<br>* colonne 2, ligne 61 – colonne 3, ligne 21 *<br><br>* colonne 3, ligne 61 – colonne 4, ligne 9 *<br>* colonne 3, ligne 57 – colonne 4, ligne 68; figures 1, 8 *<br>----- | 1-6, 8, 11, 15, 17 | |

|  |  |
|---|---|
| | DOMAINES TECHNIQUES RECHERCHES (Int. Cl.5) |
| | H02M<br>G05F<br>H01F |

Le présent rapport a été établi pour toutes les revendications

| Lieu de la recherche | Date d'achèvement de la recherche | Examinateur |
|---|---|---|
| LA HAYE | 25 FEVRIER 1991 | GARDELLA S |